# EUROPÄISCHE PATENTSCHRIFT

(11) **EP 3 408 116 B1**
(45) Veröffentlichungstag und Bekanntmachung des Hinweises auf die Patenterteilung: **04.11.2020**
(21) Anmeldenummer: 16825367.2
(22) Anmeldetag: 19.12.2016
(51) Int. Cl.: B60G 7/00, B29C 70/06, F16C 7/02, B29C 70/30, B29L 31/30, F16C 11/06

(54) **FAHRWERKBAUTEIL**
CHASSIS COMPONENT
COMPOSANT DE LA LIAISON CHÂSSIS-SOL

(30) Priorität: 29.01.2016 DE 102016201378
(43) Veröffentlichungstag der Anmeldung: 05.12.2018
(73) Patentinhaber: ZF Friedrichshafen AG, 88046 Friedrichshafen (DE)
(72) Erfinder: SCHRAMM, Mathias, 96049 Bamberg (DE)
(74) Vertreter: ZF Friedrichshafen AG
(86) Internationale Anmeldenummer: PCT/EP2016/081667
(87) Internationale Veröffentlichungsnummer: WO 2017/129322

(56) Entgegenhaltungen:
- EP-A1- 2 759 423
- EP-A2- 0 637 520
- WO-A2-2008/141218
- JP-A- H0 424 110
- JP-A- S6 076 409
- JP-A- H01 190 514
- JP-A- H07 214 222
- US-A- 5 357 775

## Beschreibung

Die Erfindung betrifft ein Fahrwerkbauteil mit einem mehrere Gelenkaufnahmebereiche umfassenden und aus einem Laminat aus faserverstärktem Kunststoff bestehenden Bauteilkörper und mehreren Gelenken, die jeweils in einem der Gelenkaufnahmebereiche angeordnet sind, wobei das Laminat in einem zwischen einem ersten der Gelenkaufnahmebereiche und einem zweiten der Gelenkaufnahmebereiche liegenden Abschnitt des Bauteilkörpers tordiert ist, sodass der zweite Gelenkaufnahmebereich gegenüber dem ersten Gelenkaufnahmebereich verdreht ist.

Ein derartiges Fahrwerkbauteil ist nach dem Oberbegriff des Anspruchs 1 aus der WO 2008/141218 A2 bekannt.

Ein solches Fahrwerkbauteil ist z.B. durch einen 3-Punkt-Lenker gegeben, der als Gelenke ein Kugelgelenk und zwei Gummilager aufweist, die relativ zum Kugelzapfen des nicht ausgelenkten Kugelgelenks um 90°verd reht sind. Die Herausforderung bei einem solchen 3-Punkt Lenker liegt insbesondere in der Anbindung der kinematischen Punkte und deren Einbindung in die Laminatstruktur des Lenkers. Gegenwärtig kommen hierzu im Bereich der Gummilager metallische Einleger (Lagerbuchsen) zum Einsatz, welche die Gummilager aufnehmen. Wird der Lenkerkörper im RTM-Verfahren hergestellt (RTM = Resin Transfer Molding), werden die Lagerbuchsen bereits im RTM-Prozess in das Spritzpresswerkzeug eingelegt. Die Gummilager, welche eine metallische Außenhülse aufweisen, werden in einem Nachfolgeprozess in die oben genannten Lagerbuchsen eingepresst. Das Problem der metallischen Einleger liegt in der Anbindung zum Laminat. Begründet ist dies durch ihren stark unterschiedlichen Ausdehnungskoeffizienten im Vergleich zum Laminat und durch eine sich ergebende Kontaktkorrosion bei Nichtverwendung von Korrosionsschutz. Weiterhin verhindert ein in der Serienfertigung der Kunststoffmatrix bzw. dem Lenkerkörper zugesetztes, internes Trennmittel eine chemische Reaktion mit metallischen Teilen.

Die gegenwärtige Einbindung der Lagerbuchsen in das Laminat erfolgt mit Hilfe von umlaufenden Schlaufen aus faserverstärktem Kunststoff. Durch die Schlaufen kann auch sichergestellt werden, dass die in sie eingesetzten Gummilager relativ zum Kugelzapfen des nicht ausgelenkten Kugelgelenks verdreht sind. Allerdings führen die Schlaufen zu sehr komplexen textilen Vor-Formlingen (Preforms) für den RTM-Prozess.

Ausgehend hiervon liegt der Erfindung die Aufgabe zugrunde, ein Fahrwerkbauteil der eingangs genannten Art derart weiterzubilden, dass es einfacher herstellbar ist.

Diese Aufgabe wird durch ein Fahrwerkbauteil nach Anspruch 1 gelöst. Bevorzugte Weiterbildungen des Fahrwerkbauteils sind in der nachfolgenden Beschreibung und in den Unteransprüchen gegeben.

Das Fahrwerkbauteil weist einen mehrere, vorzugsweise zwei oder drei, Gelenkaufnahmebereiche umfassenden und aus einem Laminat aus faserverstärktem Kunststoff bestehenden Bauteilkörper und mehrere, vorzugsweise zwei oder drei, Gelenke auf, die jeweils in einem der Gelenkaufnahmebereiche angeordnet sind, wobei das Laminat in einem zwischen einem ersten der Gelenkaufnahmebereiche und einem zweiten der Gelenkaufnahmebereiche liegenden Abschnitt des Bauteilkörpers tordiert ist, sodass der zweite Gelenkaufnahmebereich gegenüber dem ersten Gelenkaufnahmebereich verdreht ist.

Da der zweite Gelenkaufnahmebereich gegenüber dem ersten Gelenkaufnahmebereich verdreht ist, kann im zweiten Gelenkaufnahmebereich auf eine Schlaufe zum Ausbilden einer Gelenkaufnahme verzichtet werden. Ferner kann z.B. auch auf das Vorsehen einer Lagerbuchse zur Aufnahme des in dem zweiten Gelenkaufnahmebereich angeordneten Gelenks verzichtet werden. Insbesondere kann eine Gelenkaufnahme für das in dem zweiten Gelenkaufnahmebereich angeordnete Gelenk durch Einbringen eines einfachen Lochs oder Durchgangslochs in das Laminat im zweiten Gelenkaufnahmebereich ausgebildet werden.

Das Laminat ist insbesondere ein Faser-Kunststoff-Verbund. Bevorzugt umfasst das Laminat eine Kunststoffmatrix, die vorzugsweise aus einem Duroplast, beispielsweise aus einem Epoxidharz, besteht. Vorteilhaft umfasst das Laminat Fasern, die insbesondere in die Kunststoffmatrix eingebettet sind. Die Fasern sind z.B. Kohlenstofffasern und/oder Glasfasern. Bevorzugt liegen die Fasern in Form einer oder mehrerer Lagen (Faserlagen) vor. Beispielsweise liegen die Fasern und/oder die oder jede Faserlage in Form eines oder wenigstens eines Geflechts und/oder eines oder wenigstens eines Gewebes und/oder einer oder wenigstens eines Matte (Fasermatte) vor. Der Bauteilkörper wird vorzugsweise im Spritzpressverfahren oder RTM-Verfahren hergestellt. Zur Herstellung des Bauteilkörpers wird bevorzugt ein Spritzpresswerkzeug oder RTM-Werkzeug eingesetzt. Der Bauteilkörper bildet in diesem Sinne insbesondere ein RTM-Bauteil.

Unter dem Ausdruck "tordiert" ist insbesondere nicht zu verstehen, dass das Laminat in dem Abschnitt des Bauteilkörpers durch Verdrehen oder Torsion verformt worden ist. Dies ist bei Einsatz einer duroplastischen Kunststoffmatrix auch nur schwer zu realisieren. Es ist unter dem Ausdruck "tordiert" zu verstehen, dass das Laminat in dem Abschnitt des Bauteilkörpers in seiner Form einem Körper gleicht, der durch Verdrehen oder Torsion verformt worden ist. In diesem Sinne kann der Ausdruck "tordiert" z.B. auch durch den Ausdruck "mit einer einer tordierten Form gleichenden Form versehen" ersetzt werden. Vorzugsweise wird der tordierte Bereich des Laminats im Spritzpressprozess oder RTM-Prozess ausgebildet. Insbesondere wird der tordierte Bereich des Laminats durch eine geeignet ausgestaltete Kavität im Spritzpresswerkzeug oder RTM-Werkzeug realisiert.

Der Bauteilkörper weist bevorzugt einen den Abschnitt umfassenden länglichen Bereich oder Arm auf, mittels welchem der zweiten Gelenkaufnahmebereich mit dem ersten Gelenkaufnahmebereich verbunden ist. Der längliche Bereich oder Arm kann z.B. gerade oder gekrümmt ausgebildet sein. Das Fahrwerkbauteil bildet bevorzugt einen Lenker, beispielsweise einen Querlenker.

Gemäß einer Weiterbildung ist das Laminat in einem zwischen dem ersten Gelenkaufnahmebereich und einem dritten der Gelenkaufnahmebereiche liegenden Abschnitt des Bauteilkörpers tordiert, sodass der dritte Gelenkaufnahmebereich gegenüber dem ersten Gelenkaufnahmebereich verdreht ist. Somit sind sowohl der zweite als auch der dritte Gelenkaufnahmebereich gegenüber dem ersten Gelenkaufnahmebereich verdreht, was für die Ausbildung des Fahrwerkbauteils als 3-Punkt-Lenker vorteilhaft ist. Der zweite und der dritte Gelenkaufnahmebereich verlaufen vorzugsweise parallel oder näherungsweise parallel zueinander. Da der dritte Gelenkaufnahmebereich gegenüber dem ersten Gelenkaufnahmebereich verdreht ist, kann im dritten Gelenkaufnahmebereich auf eine Schlaufe zum Ausbilden einer Gelenkaufnahme verzichtet werden. Ferner kann z.B. auch auf das Vorsehen einer Lagerbuchse zur Aufnahme des in dem dritten Gelenkaufnahmebereich angeordneten Gelenks verzichtet werden. Insbesondere kann eine Gelenkaufnahme für das in dem dritten Gelenkaufnahmebereich angeordnete Gelenk durch Einbringen eines einfachen Lochs oder Durchgangslochs in das Laminat im dritten Gelenkaufnahmebereich ausgebildet werden.

Bevorzugt weist der Bauteilkörper mehrere Arme auf, die jeweils einen der Abschnitte umfassen, wobei der zweite Gelenkaufnahmebereich mit dem ersten Gelenkaufnahmebereich durch einen ersten der Arme und der dritte Gelenkaufnahmebereich mit dem ersten Gelenkaufnahmebereich durch einen zweiten der Arme verbunden ist. Die Arme sind beispielsweise jeweils gerade oder gekrümmt ausgebildet. Das Fahrwerkbauteil bildet bevorzugt einen 3-Punkt-Lenker oder Dreiecklenker. Die Arme können insbesondere auch als Lenkerarme bezeichnet werden.

Die Gelenkaufnahmebereiche sind z.B. jeweils an einem Ende oder an einer Ecke des Bauteilkörpers vorgesehen. Bevorzugt ist der erste Gelenkaufnahmebereich an einer Ecke des Bauteilkörpers oder an einem, vorzugsweise freien, Ende des Bauteilkörpers und/oder des länglichen Bereichs oder Arms und/oder des ersten Arms und/oder des zweiten Amrs vorgesehen. Insbesondere ist der zweite Gelenkaufnahmebereich an einem, vorzugsweise freien, Ende oder anderen Ende des Bauteilkörpers und/oder des länglichen Bereichs oder Arms und/oder des ersten Arms vorgesehen. Vorteilhaft ist der dritte Gelenkaufnahmebereich an einem, vorzugsweise freien, Ende oder weiteren Ende des Bauteilkörpers und/oder des zweiten Arms vorgesehen.

Gemäß der Erfindung ist der zweite Gelenkaufnahmebereich gegenüber dem ersten Gelenkaufnahmebereich um einen Winkel verdreht. Vorteilhaft ist der dritte Gelenkaufnahmebereich gegenüber dem ersten Gelenkaufnahmebereich um einen Winkel verdreht. Bevorzugt sind der zweite Gelenkaufnahmebereich und/oder der dritte Gelenkaufnahmebereich jeweils gegenüber dem ersten Gelenkaufnahmebereich um einen Winkel verdreht. Der oder jeder der Winkel beträgt beispielsweise 90° oder näherungsweise 90°.

Erfindungsgemäß ist der oder jeder der Winkel aber größer als 0° und kleiner 90°. Zwar ist in der Regel ein Winkel von 90°gewünscht, für ein Entformen des Bauteilkörpers im Spritzpresswerkzeug oder RTM-Werkzeug ist jedoch ein Winkel von weniger als 90°sinnvoll. Insbesondere beträgt der od er jeder der Winkel 87° oder 88° oder näherungsweise 87°oder 88°. Ein derartiger Wi nkel kommt nahe an 90°heran, lässt ein Entformen des Bauteilkörpers aber noch zu.

Gemäß einer Ausgestaltung ist in dem zweiten Gelenkaufnahmebereich in das Laminat eine, insbesondere durchgehende, Ausnehmung eingebracht, in der das im zweiten Gelenkaufnahmebereich angeordnete Gelenk, vorzugsweise direkt, sitzt und/oder eingebracht ist, insbesondere eingepresst ist, vorzugsweise direkt eingepresst ist. Vorteilhaft ist in dem dritten Gelenkaufnahmebereich in das Laminat eine, insbesondere durchgehende, Ausnehmung eingebracht, in der das im dritten Gelenkaufnahmebereich angeordnete Gelenk, vorzugsweise direkt, sitzt und/oder eingebracht ist, insbesondere eingepresst ist, vorzugsweise direkt eingepresst ist. Bevorzugt ist in dem zweiten Gelenkaufnahmebereich und/oder in dem dritten Gelenkaufnahmebereich in das Laminat jeweils eine, insbesondere durchgehende, Ausnehmung eingebracht, in der das im jeweiligen Gelenkaufnahmebereich angeordnete Gelenk, vorzugsweise direkt, sitzt und/oder eingebracht ist, insbesondere eingepresst ist, vorzugsweise direkt eingepresst ist. Die Ausnehmung oder jede der Ausnehmungen bildet somit eine Gelenkaufnahme, die relativ einfach herstellbar ist. Beispielsweise kann die Ausnehmung oder jede der Ausnehmungen während des Spritzpressverfahrens oder RTM-Verfahrens im Spritzpresswerkzeug oder RTM-Werkzeug vorgesehen werden. Unter dem Ausdruck "durchgehende Ausnehmung" ist insbesondere eine Ausnehmung zu verstehen, die sich durch das Laminat hindurch erstreckt. Anstelle des Ausdrucks "Ausnehmung" und/oder "durchgehende Ausnehmung" kann z.B. auch der Ausdruck "Loch" und/oder "Durchgangsloch" verwendet werden. Durch das Einpressen des oder jedes der Gelenke in die oder die jeweiligen Ausnehmung wird insbesondere eine kraftschlüssige Verbindung geschaffen. Unter dem Ausdruck "direkt" wird in diesem Zusammenhang vorzugsweise verstanden, dass keine Lagerbuchse zur Aufnahme des oder des jeweiligen Gelenks vorhanden und/oder zwischengeschaltet ist.

Gemäß einer Weiterbildung erstreckt sich die Ausnehmung in dem zweiten Gelenkaufnahmebereich senkrecht oder schräg zum zweiten Gelenkaufnahmebereich und/oder zur Laminatebene des zweiten Gelenkaufnahmebereichs. Vorteilhaft erstreckt sich die Ausnehmung in dem dritten Gelenkaufnahmebereich senkrecht oder schräg zum dritten Gelenkaufnahmebereich und/oder zur Laminatebene des dritten Gelenkaufnahmebereichs. Bevorzugt erstrecken sich die Ausnehmungen in dem zweiten Gelenkaufnahmebereich und/oder in dem dritten Gelenkaufnahmebereich jeweils senkrecht oder schräg zum jeweiligen Gelenkaufnahmebereich und/oder zur Laminatebene des jeweiligen Gelenkaufnahmebereichs. Das schräge Erstrecken der oder jeder der Ausnehmungen ist insbesondere dann sinnvoll, wenn der oder der jeweilige Winkel weniger als 90°beträgt.

Gemäß einer Ausgestaltung erstreckt sich die Ausnehmung in dem zweiten Gelenkaufnahmebereich parallel zur Laminatebene des ersten Gelenkaufnahmebereichs und/oder die Ausnehmung in dem zweiten Gelenkaufnahmebereich liegt in der Laminatebene des ersten Gelenkaufnahmebereichs oder in einer diese Laminatebene umfassenden Ebene. Vorteilhaft erstreckt sich die Ausnehmung in dem dritten Gelenkaufnahmebereich parallel zur Laminatebene des ersten Gelenkaufnahmebereichs und/oder die Ausnehmung in dem dritten Gelenkaufnahmebereich liegt in der Laminatebene des ersten Gelenkaufnahmebereichs oder in einer diese Laminatebene umfassenden Ebene. Bevorzugt erstrecken sich die Ausnehmungen in dem zweiten Gelenkaufnahmebereich und/oder in dem dritten Gelenkaufnahmebereich jeweils parallel zur Laminatebene des ersten Gelenkaufnahmebereichs und/oder die Ausnehmungen in dem zweiten Gelenkaufnahmebereich und/oder in dem dritten Gelenkaufnahmebereich liegen jeweils in der Laminatebene des ersten Gelenkaufnahmebereichs oder in einer diese Laminatebene umfassenden Ebene.

Gemäß einer Weiterbildung erstreckt sich das in dem zweiten Gelenkaufnahmebereich angeordnete Gelenk durch die Ausnehmung des zweiten Gelenkaufnahmebereichs hindurch. Vorteilhaft erstreckt sich das in dem dritten Gelenkaufnahmebereich angeordnete Gelenk durch die Ausnehmung des dritten Gelenkaufnahmebereichs hindurch. Bevorzugt erstrecken sich die in dem zweiten Gelenkaufnahmebereich und/oder in dem dritten Gelenkaufnahmebereich angeordneten Gelenke jeweils durch die Ausnehmung des jeweiligen Gelenkaufnahmebereichs hindurch.

Gemäß einer Ausgestaltung ist das in dem zweiten Gelenkaufnahmebereich angeordnete Gelenk, insbesondere zusätzlich, formschlüssig in der Ausnehmung des zweiten Gelenkaufnahmebereichs festgelegt. Vorteilhaft ist das in dem dritten Gelenkaufnahmebereich angeordnete Gelenk, insbesondere zusätzlich, formschlüssig in der Ausnehmung des dritten Gelenkaufnahmebereichs festgelegt. Bevorzugt sind die in dem zweiten Gelenkaufnahmebereich und/oder in dem dritten Gelenkaufnahmebereich angeordneten Gelenke jeweils, insbesondere zusätzlich, formschlüssig in der Ausnehmung des jeweiligen Gelenkaufnahmebereichs festgelegt. Das formschlüssige Festlegen kann z.B. durch Verstemmen oder Hohlnietprozesse erfolgen.

Gemäß einer Weiterbildung ist das in dem zweiten Gelenkaufnahmebereich angeordnete Gelenk als Elastomerlager ausgebildet. Vorteilhaft ist das in dem dritten Gelenkaufnahmebereich angeordnete Gelenk als Elastomerlager ausgebildet. Bevorzugt sind die in dem zweiten Gelenkaufnahmebereich und/oder in dem dritten Gelenkaufnahme angeordneten Gelenke jeweils als Elastomerlager ausgebildet.

Das oder jedes der Elastomerlager umfasst insbesondere ein Innenteil, eine das Innenteil umringende Außenhülse und einen zwischen dem Innenteil und der Außenhülse angeordneten und insbesondere das Innenteil mit der Außenhülse verbindenden Elastomerkörper, der vorzugsweise ein Gummikörper ist. Das oder jedes der Elastomerlager ist insbesondere ein Gummilager. Bevorzugt besteht das oder jedes der Innenteile aus Kunststoff oder aus Metall, beispielsweise aus Stahl, Magnesium oder Aluminium. Vorteilhaft besteht die oder jede der Außenhülsen aus Kunststoff oder aus Metall, beispielsweise aus Stahl, Magnesium oder Aluminium. Vorzugsweise besteht der oder jeder der Elastomerkörper aus einem Elastomer, beispielsweise aus Gummi.

Gemäß einer Ausgestaltung ist in dem ersten Gelenkaufnahmebereich in das Laminat eine Ausnehmung eingebracht, in der das in dem ersten Gelenkaufnahmebereich angeordnete Gelenk sitzt. Bevorzugt erstreckt sich die Ausnehmung in dem ersten Gelenkaufnahmebereich senkrecht oder im Wesentlichen senkrecht zum ersten Gelenkaufnahmebereich und/oder zur Laminatebene des ersten Gelenkaufnahmebereichs. Vorteilhaft ist das in dem ersten Gelenkaufnahmebereich angeordnete Gelenk als Kugelgelenk ausgebildet.

Das Kugelgelenk umfasst insbesondere eine Kugelpfanne und einen in der Kugelpfanne gelenkig gelagerten Kugelzapfen. Die Kugelpfanne bildet z.B. ein Kugelgelenkgehäuse oder ist in einem Kugelgelenkgehäuse vorgesehen. Bevorzugt erstreckt sich der Kugelzapfen aus der Kugelpfanne und/oder dem Kugelgelenkgehäuse heraus. Das Kugelgelenk ist vorzugsweise mit seiner Kugelpfanne und/oder mit seinem Kugelgelenkgehäuse an dem ersten Gelenkaufnahmebereich festgelegt. Insbesondere sitzt das Kugelgelenk mit seiner Kugelpfanne und/oder mit seinem Kugelgelenkgehäuse in der Ausnehmung im ersten Gelenkaufnahmebereich. Die Kugelpfanne besteht bevorzugt aus Kunststoff oder aus Metall, beispielsweise aus Stahl, Magnesium oder Aluminium. Ferner besteht der Kugelzapfen vorzugsweise aus Kunststoff oder aus Metall, beispielsweise aus Stahl, Magnesium oder Aluminium. Vorteilhaft besteht das Kugelgelenkgehäuse aus Kunststoff oder aus Metall, beispielsweise aus Stahl, Magnesium oder Aluminium.

Das Fahrwerkbauteil ist bevorzugt für ein Fahrzeug oder Kraftfahrzeug vorgesehen. Insbesondere ist das Fahrwerkbauteil in das Fahrwerk eines Fahrzeugs oder Kraftfahrzeugs eingebaut. Beispielsweise ist das Fahrwerkbauteil mittels seiner Gelenke mit anderen Fahrzeugteilen oder Fahrwerkteilen verbunden. Bevorzugt ist das Fahrwerkbauteil mittels seines im ersten Gelenkaufnahmebereich angeordneten Gelenks mit einem Fahrzeugrad, mit einem Radträger oder mit einem Achskörper verbunden. Vorzugsweise ist das Fahrwerkbauteil mittels seines im zweiten Gelenkaufnahmebereich angeordneten Gelenks mit einem Fahrzeugaufbau oder Fahrzeugrahmen, mit einem Fahrschemel oder mit einem Hilfsrahmen verbunden. Vorteilhaft ist das Fahrwerkbauteil mittels seines im dritten Gelenkaufnahmebereich angeordneten Gelenks mit dem oder einem Fahrzeugaufbau oder Fahrzeugrahmen, mit dem oder einem Fahrschemel oder mit dem oder einem Hilfsrahmen verbunden. Insbesondere ist mittels des Fahrwerkbauteils ein Fahrzeugrad, ein Radträger oder ein Achskörper gelenkig mit einem Fahrzeugaufbau oder Fahrzeugrahmen verbunden.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht eines 3-Punkt-Lenkers nach dem Stand der Technik im teilmontierten Zustand,
- Fig. 2: eine perspektivische Ansicht einer aus Fig. 1 ersichtlichen Schlaufe des 3-Punkt-Lenkers nach dem Stand der Technik,
- Fig. 3: eine perspektivische Teilansicht eines Bauteilkörpers eines Fahrwerkbauteils gemäß einer Ausführungsform,
- Fig. 4: eine perspektivische Teilansicht das Fahrwerkbauteils gemäß der Ausführungsform,
- Fig. 5: eine Draufsicht auf ein freies Ende eines Lenkerarms des Fahrwerkbauteils gemäß der Ausführungsform und
- Fig. 6: die Draufsicht nach Fig. 5 bei einer Abwandlung der Ausführungsform.

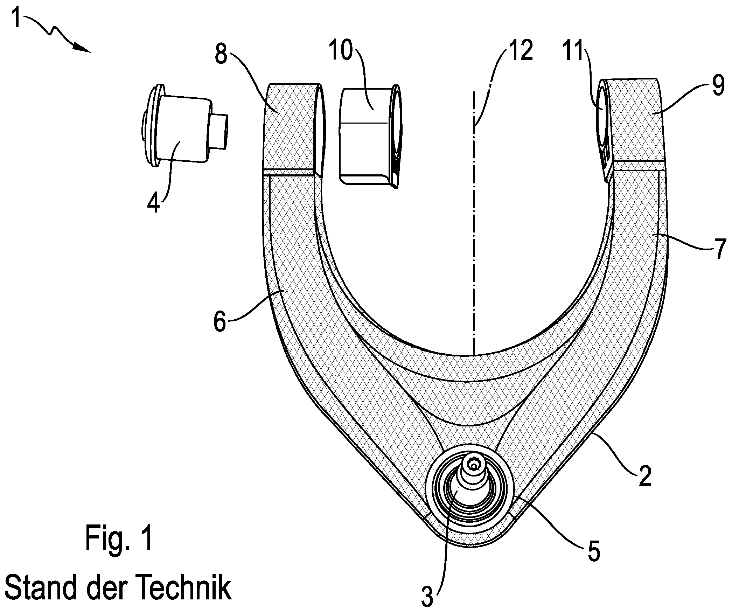

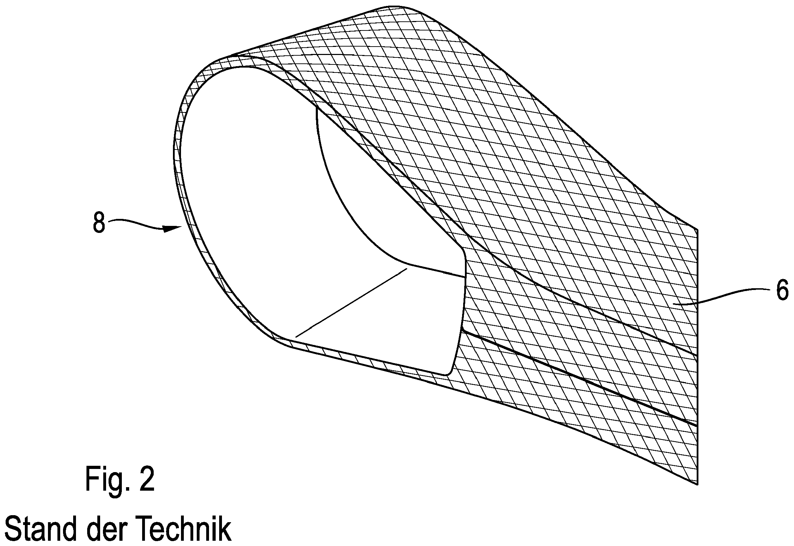

Aus Fig. 1 ist eine perspektivische Ansicht eines als 3-Punkt-Lenker ausgebildeten Fahrwerkbauteils 1 nach dem Stand der Technik im teilmontierten Zustand ersichtlich. Der Lenker 1 umfasst einen aus einem Laminat aus faserverstärktem Kunststoff bestehenden Bauteilkörper 2 und mehrere Gelenke 3 und 4. Das Gelenk 3 ist als Kugelgelenk ausgebildet und sitzt in einer in einem ersten Gelenkaufnahmebereich 5 des Bauteilkörpers 2 vorgesehenen Ausnehmung, die eine Gelenkaufnahme für das Kugelgelenk 3 bildet. Das Gelenk 4 ist hingegen als Gummilager ausgebildet. Der Bauteilkörper 2 umfasst zwei Lenkerarme 6 und 7, an deren Enden jeweils eine Schlaufe 8 bzw. 9 vorgesehen ist, wobei in die Schlaufe 8 eine Lagerbuchse 10 einzubringen ist, die zur Aufnahme des Gummilagers 4 dient. In die Schlaufe 9 ist bereits eine Lagerbuchse 11 eingebracht, die ebenfalls zur Aufnahme eines Gummilagers (nicht gezeigt) dient, welches identisch zu dem Gummilager 4 ausgebildet ist. Die Schlaufen 8 und 9 bilden somit Gelenkaufnahmebereiche des Bauteilkörpers 2. Eine vergrößerte Ansicht der Schlaufe 8 ist in Fig. 2 gezeigt. Die Herstellung des nach dem RTM-Verfahren gefertigten Bauteilkörpers 2 ist wegen der Schlaufen 8 und 9 relativ aufwendig, da ein komplexer Vor-Formling erforderlich ist. Der Bauteilkörper 2 und auch der fertig montierte 3-Punkt-Lenker sind bezüglich einer schematisch angedeuteten Symmetrieebene 12 spiegelsymmetrisch ausgebildet.

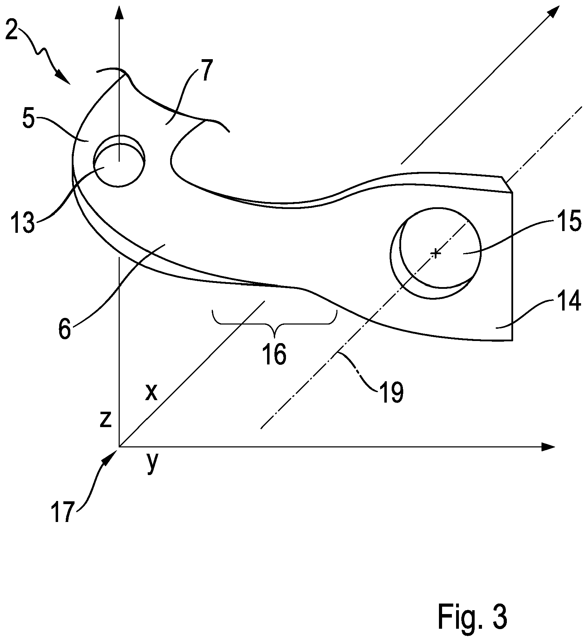

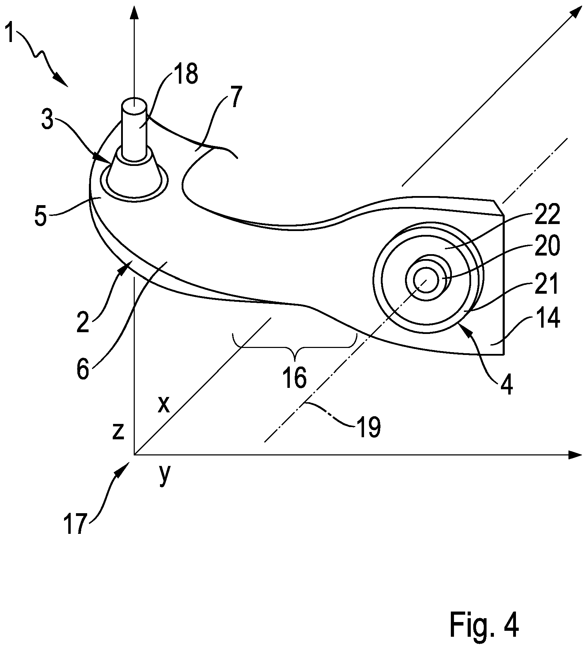

Aus Fig. 3 ist eine perspektivische Teilansicht eines Bauteilkörpers 2 eines Fahrwerkbauteils 1 gemäß einer Ausführungsform ersichtlich, welches im montierten Zustand einen 3-Punkt-Lenker bildet. Der Bauteilkörper 2 besteht aus einem Laminat aus faserverstärktem Kunststoff und weist einen ersten Gelenkaufnahmebereich 5 auf, in dem eine Ausnehmung 13 zur Aufnahme eines Kugelgelenks 3 vorgesehen ist. Ferner weist der Bauteilkörper 2 einen zweiten Gelenkaufnahmebereich 14 auf, in dem eine durchgehende Ausnehmung 15 vorgesehen ist, die zur Aufnahme eines Gummilagers 4 dient. Der Bauteilkörper 2 umfasst einen ersten Lenkerarm 6, der den ersten Gelenkaufnahmebereich 5 mit dem zweiten Gelenkaufnahmebereich 14 verbindet, wobei der Bauteilkörper 2 in einem Abschnitt 16 des Lenkerarms 6 tordiert ist, sodass der zweite Gelenkaufnahmebereich 14 gegenüber dem ersten Gelenkaufnahmebereich 5 verdreht ist. Eine perspektivische Teilansicht des Fahrwerkbauteils 1 gemäß der Ausführungsform im montierten Zustand zeigt Fig. 4, wonach das Kugelgelenk 3 in die Ausnehmung 13 und das Gummilager 4 in die Ausnehmung 15 eingesetzt ist.

In den Fig. 3 und 4 ist ein Koordinatensystem 17 gezeigt, welches drei Koordinatenachsen x, y und z umfasst, die in der Reihenfolge y, x und z ein orthogonales Rechtssystem definieren. Der erste Gelenkaufnahmebereich 5 verläuft parallel zur x-y-Ebene, wobei die Ausnehmung 13 sich in z-Richtung, also senkrecht zur x-y-Ebene, durch den Gelenkaufnahmebereich 5 hindurch erstreckt. Ferner weist das Kugelgelenk 3 einen Kugelzapfen 18 auf, der sich im dargestellten, nicht ausgelenkten Zustand des Kugelgelenks 3 in z-Richtung erstreckt. Die Ausnehmung 15 erstreckt sich durch den zweiten Gelenkaufnahmebereich 14 entlang einer in x-Richtung verlaufenden Achse 19 hindurch, die eine Längsmittelachse der Ausnehmung 15 bildet. Ferner umfasst das Gummilager 4 ein Innenteil 20, eine das Innenteil 20 umringende Außenhülse 21 und einen zwischen dem Innenteil 20 und der Außenhülse 21 angeordneten Gummikörper 22, mittels welchem das Innenteil 20 mit der Außenhülse 21 verbunden ist. Das Innenteil 20 und die Außenhülse 21 erstrecken sich dabei in Richtung der Achse 19, die ferner eine Längsmittelachse des Gummilagers 4 bildet.

Der Bauteilkörper 2 weist einen zweiten Lenkerarm 7 auf, der entsprechend dem ersten Lenkerarm 6 ausgebildet ist. Ferner ist von dem Lenkerarm 7 im montierten Zustand des Fahrwerkbauteils 1 ein Gummilager (nicht gezeigt) aufgenommen, das entsprechend dem Gummilager 4 ausgebildet ist. Das Fahrwerkbauteil 1 ist bezüglich einer in der y-z-Ebene liegenden oder parallel zu dieser verlaufenden Symmetrieebene spiegelsymmetrisch oder im Wesentlichen spiegelsymmetrisch ausgebildet, sodass sich der in den Fig. 3 und 4 nicht dargestellte Teil des Fahrwerkbauteils 1 insbesondere durch Spiegeln des dargestellten Teils an der Symmetrieebene ergibt.

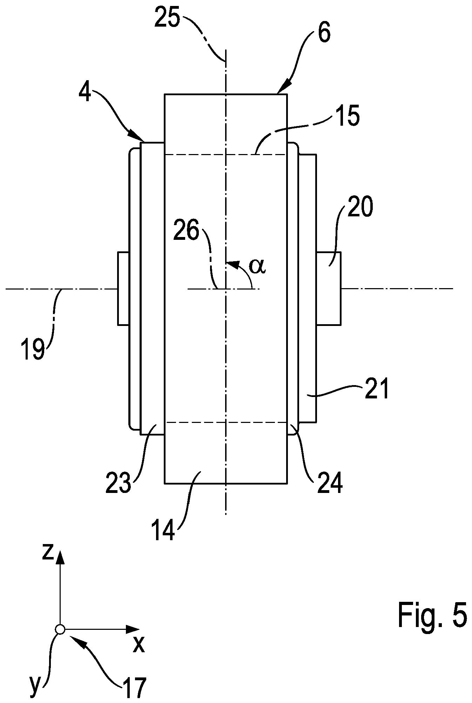

Fig. 5 zeigt eine Stirnansicht auf das freie Ende des ersten Lenkerarms 6. Das Gummilager 4 ist in die Ausnehmung 15 eingepresst und somit kraftschlüssig an dem Gelenkaufnahmebereich 14 festgelegt. Zusätzlich ist das Gummilager 4 formschlüssig an dem Gelenkaufnahmebereich 14 festgelegt. Die formschlüssige Verbindung ist durch einen ringförmigen Radialflansch 23 der Außenhülse 21 und durch eine ringförmige Materialanhäufung 24 gegeben, die nach dem Einpressen des Gummilagers 4 in die Ausnehmung 15 durch plastische Verformung eines Teils der Außenhülse 21 gebildet worden ist. Die Ausnehmung 15 ist schematisch in Fig. 5 angedeutet. Ferner ist in Fig. 5 schematisch die Laminatebene 25 des Laminats im Gelenkaufnahmebereich 14 angedeutet, die parallel zu y-z-Ebene verläuft. Die ebenfalls angedeutete Laminatebene 26 des Laminats im Gelenkaufnahmebereich 5 fällt insbesondere mit der x-y-Ebene zusammen oder verläuft parallel zu dieser. Bevorzugt liegt die Achse 19 in der Laminatebene 26 des Gelenkaufnahmebereichs 5 oder verläuft parallel zu dieser.

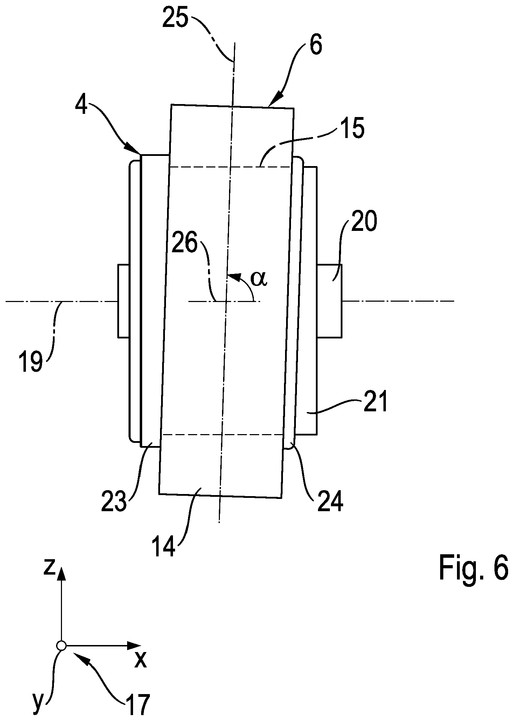

Idealerweise ist der Lenkerarm 6 im Abschnitt 16 derart tordiert, dass der Gelenkaufnahmebereich 14 parallel zur y-z-Ebene verlauft und somit um einen Winkel α von 90°gegenüber dem Gelenkaufnahmebereich 5 verdreht ist. Aus fertigungstechnischen Gründen ist der Gelenkaufnahmebereich 14 gegenüber der y-z-Ebene aber geringfügig geneigt, insbesondere um 2°oder 3°, sodass der Gelenkaufnahmebereich 14 um einen Winkel α von weniger als 90°, insbesondere um einen Winkel α von 87°oder 88°, gegenüber dem Gelenkaufnahmeberei ch 5 verdreht ist. Dies ist in Fig. 6 gezeigt, aus der eine Abwandlung der Ausführungsform ersichtlich ist. Die Ausnehmung 15 erstreckt sich in diesem Fall nicht senkrecht zum zweiten Gelenkaufnahmebereich 14 und/oder zur Laminatebene 25, sondern ist, wie auch die Gerade 19, gegenüber einer senkrecht zum zweiten Gelenkaufnahmebereich 14 und/oder zur Laminatebene 25 verlaufenden Geraden geringfügig geneigt, insbesondere um 2°oder 3°. Alternativ können sich die Ausn ehmung 15 und/oder die Gerade 19 z.B. aber auch senkrecht zum zweiten Gelenkaufnahmebereich 14 und/oder zur Laminatebene 25 erstrecken. In diesem Fall wird die geringfügige Neigung bevorzugt durch das Gummilager 4 und/oder durch angrenzende Bauteile ausgeglichen.

### Bezugszeichen

- 1: Fahrwerkbauteil / 3-Punkt-Lenker
- 2: Bauteilkörper
- 3: Gelenk / Kugelgelenk
- 4: Gelenk / Gummilager
- 5: erster Gelenkaufnahmebereich
- 6: Lenkerarm / erster Lenkerarm
- 7: Lenkerarm / zweiter Lenkerarm
- 8: Schlaufe am Lenkerarm
- 9: Schlaufe am Lenkerarm
- 10: Lagerbuchse
- 11: Lagerbuchse
- 12: Symmetrieebene
- 13: Ausnehmung
- 14: zweiter Gelenkaufnahmebereich
- 15: Ausnehmung
- 16: tordierter Abschnitt des Lenkerarms
- 17: Koordinatensystem
- 18: Kugelzapfen des Kugelgelenks
- 19: Achse / Längsmittelachse
- 20: Innenteil des Gummilagers
- 21: Außenhülse des Gummilagers
- 22: Gummikörper des Gummilagers
- 23: Radialflansch der Außenhülse
- 24: Materialanhäufung an Außenhülse
- 25: Laminatebene
- 26: Laminatebene
- α: Winkel zwischen Laminatebenen/Gelenkaufnahmebereichen
- x: x-Achse des Koordinatensystems
- y: y-Achse des Koordinatensystems
- z: z-Achse des Koordinatensystems

## Patentansprüche

1. Fahrwerkbauteil mit einem mehrere Gelenkaufnahmebereiche (5, 14) umfassenden und aus einem Laminat aus faserverstärktem Kunststoff bestehenden Bauteilkörper (2) und mehreren Gelenken (3, 4), die jeweils in einem der Gelenkaufnahmebereiche (5, 14) angeordnet sind, wobei das Laminat in einem zwischen einem ersten der Gelenkaufnahmebereiche (5) und einem zweiten der Gelenkaufnahmebereiche (14) liegenden Abschnitt (16) des Bauteilkörpers (2) tordiert ist, sodass der zweite Gelenkaufnahmebereich (14) gegenüber dem ersten Gelenkaufnahmebereich (5) verdreht ist, **dadurch gekennzeichnet, dass** der zweite Gelenkaufnahmebereich (14) gegenüber dem ersten Gelenkaufnahmebereich (5) um mehr als 0°aber um weniger als 90°verdreht ist.

2. Fahrwerkbauteil nach Anspruch 1, **dadurch gekennzeichnet, dass** in dem zweiten Gelenkaufnahmebereich (14) in das Laminat eine Ausnehmung (15) eingebracht ist, in der das im zweiten Gelenkaufnahmebereich (14) angeordnete Gelenk (4) sitzt.

3. Fahrwerkbauteil nach Anspruch 2, **dadurch gekennzeichnet, dass** sich die Ausnehmung (15) in dem zweiten Gelenkaufnahmebereich (14) schräg zur Laminatebene (25) des zweiten Gelenkaufnahmebereichs (14) erstreckt.

4. Fahrwerkbauteil nach Anspruch 2 oder 3, **dadurch gekennzeichnet, dass** die Ausnehmung (15) in dem zweiten Gelenkaufnahmebereich (14) sich parallel zur Laminatebene (26) des ersten Gelenkaufnahmebereichs (5) erstreckt oder in der Laminatebene (26) des ersten Gelenkaufnahmebereichs (5) oder in einer diese Laminatebene (26) umfassenden Ebene liegt.

5. Fahrwerkbauteil nach einem der Ansprüche 2 bis 4, **dadurch gekennzeichnet, dass** das in dem zweiten Gelenkaufnahmebereich (14) angeordnete Gelenk (4) in die Ausnehmung (15) des zweiten Gelenkaufnahmebereichs (14) eingepresst ist.

6. Fahrwerkbauteil nach Anspruch 5, **dadurch gekennzeichnet, dass** das in dem zweiten Gelenkaufnahmebereich (14) angeordnete Gelenk (4) zusätzlich formschlüssig in der Ausnehmung (15) des zweiten Gelenkaufnahmebereichs (14) festgelegt ist.

7. Fahrwerkbauteil nach einem der vorangehenden Ansprüche, **dadurch gekennzeichnet, dass** das in dem zweiten Gelenkaufnahmebereich (14) angeordnete Gelenk (4) als Elastomerlager ausgebildet ist.

8. Fahrwerkbauteil nach einem der vorangehenden Ansprüche, **dadurch gekennzeichnet, dass** in dem ersten Gelenkaufnahmebereich (5) in das Laminat eine Ausnehmung (13) eingebracht ist, in der das in dem ersten Gelenkaufnahmebereich (5) angeordnete Gelenk (3) sitzt.

9. Fahrwerkbauteil nach Anspruch 8, **dadurch gekennzeichnet, dass** sich die Ausnehmung (13) in dem ersten Gelenkaufnahmebereich (5) senkrecht oder im Wesentlichen senkrecht zur Laminatebene (26) des ersten Gelenkaufnahmebereichs (5) erstreckt.

10. Fahrwerkbauteil nach einem der vorangehenden Ansprüche, **dadurch gekennzeichnet, dass** das in dem ersten Gelenkaufnahmebereich (5) angeordnete Gelenk (3) als Kugelgelenk ausgebildet ist.

11. Fahrwerkbauteil nach einem der vorangehenden Ansprüche, **dadurch gekennzeichnet, dass** das Laminat in einem zwischen dem ersten Gelenkaufnahmebereich (5) und einem dritten der Gelenkaufnahmebereiche liegenden Abschnitt des Bauteilkörpers (2) tordiert ist, sodass der dritte Gelenkaufnahmebereich gegenüber dem ersten Gelenkaufnahmebereich (5) verdreht ist.

12. Fahrwerkbauteil nach Anspruch 11, **dadurch gekennzeichnet, dass** der Bauteilkörper (2) mehrere Arme (6, 7) aufweist, die jeweils einen der Abschnitte (16) umfassen, wobei der zweite Gelenkaufnahmebereich (14) mit dem ersten Gelenkaufnahmebereich (5) durch einen ersten der Arme (6) und der dritte Gelenkaufnahmebereich mit dem ersten Gelenkaufnahmebereich (5) durch einen zweiten der Arme (7) verbunden ist.

13. Fahrwerkbauteil nach einem der vorangehenden Ansprüche, **dadurch gekennzeichnet, dass** das Laminat eine duroplastische Kunststoffmatrix umfasst.

## Claims

1. Chassis component having a component body (2), which comprises a plurality of joint-receiving regions (5, 14) and which is composed of a laminate of fibre-reinforced plastic, and having a plurality of joints (3, 4), which are arranged in each case in one of the joint-receiving regions (5, 14), wherein the laminate is twisted in a portion (16) of the component body (2) situated between a first of the joint-receiving regions (5) and a second of the joint-receiving regions (14), such that the second joint-receiving region (14) is rotationally offset with respect to the first joint-receiving region (5), **characterized in that** the second joint-receiving region (14) is rotationally offset with respect to the first joint-receiving region (5) by more than 0° but by less than 90°.

2. Chassis component according to Claim 1, **characterized in that**, in the second joint-receiving region (14), there is formed into the laminate a recess (15) in which the joint (4) arranged in the second joint-receiving region (14) is seated.

3. Chassis component according to Claim 2, **characterized in that** the recess (15) in the second joint-receiving region (14) extends obliquely with respect to the laminate plane (25) of the second joint-receiving region (14) .

4. Chassis component according to Claim 2 or 3, **characterized in that** the recess (15) in the second joint-receiving region (14) extends parallel to the laminate plane (26) of the first joint-receiving region (5) or lies in the laminate plane (26) of the first joint-receiving region (5) or in a plane which comprises said laminate plane (26).

5. Chassis component according to any of Claims 2 to 4, **characterized in that** the joint (4) arranged in the second joint-receiving region (14) is pressed into the recess (15) of the second joint-receiving region (14).

6. Chassis component according to Claim 5, **characterized in that** the joint (4) arranged in the second joint-receiving region (14) is additionally fixed in positively locking fashion in the recess (15) of the second joint-receiving region (14).

7. Chassis component according to any of the preceding claims, **characterized in that** the joint (4) arranged in the second joint-receiving region (14) is formed as an elastomer bearing.

8. Chassis component according to any of the preceding claims, **characterized in that**, in the first joint-receiving region (5), there is formed into the laminate a recess (13) in which the joint (3) arranged in the first joint-receiving region (5) is seated.

9. Chassis component according to Claim 8, **characterized in that** the recess (13) in the first joint-receiving region (5) extends perpendicular or substantially perpendicular to the laminate plane (26) of the first joint-receiving region (5).

10. Chassis component according to any of the preceding claims, **characterized in that** the joint (3) arranged in the first joint-receiving region (5) is formed as a ball joint.

11. Chassis component according to any of the preceding claims, **characterized in that** the laminate is twisted in a portion of the component body (2) which lies between the first joint-receiving region (5) and a third of the joint-receiving regions, such that the third joint-receiving region is rotationally offset with respect to the first joint-receiving region (5).

12. Chassis component according to Claim 11, **characterized in that** the component body (2) has a plurality of arms (6, 7) which each comprise one of the portions (16), wherein the second joint-receiving region (14) is connected to the first joint-receiving region (5) by a first of the arms (6) and the third joint-receiving region is connected to the first joint-receiving region (5) by a second of the arms (7).

13. Chassis component according to any of the preceding claims, **characterized in that** the laminate comprises a thermosetting plastics matrix.

## Revendications

1. Composant de châssis roulant comprenant un corps de composant (2) comportant plusieurs zones de réception d'articulation (5, 14) et composé d'un stratifié en matière plastique renforcée de fibres ainsi que plusieurs articulations (3, 4) qui sont respectivement disposées dans l'une des zones de réception d'articulation (5, 14), le stratifié étant tordu dans une portion (16) du corps de composant (2) qui se trouve entre une première des zones de réception d'articulation (5) et une deuxième des zones de réception d'articulation (14), de sorte que la deuxième zone de réception d'articulation (14) présente une torsion par rapport à la première zone de réception d'articulation (5), **caractérisé en ce que** la deuxième zone de réception d'articulation (14) présente une torsion de plus de 0°, mais de moins de 90° par rapport à la première zone de réception d'articulation (5).

2. Composant de châssis roulant selon la revendication 1, **caractérisé en ce que** dans la deuxième zone de réception d'articulation (14), un creux (15) est incorporé dans le stratifié, dans lequel repose l'articulation (4) disposée dans la deuxième zone de réception d'articulation (14).

3. Composant de châssis roulant selon la revendication 2, **caractérisé en ce que** le creux (15) dans la deuxième zone de réception d'articulation (14) s'étend en biais par rapport au plan de stratification (25) de la deuxième zone de réception d'articulation (14).

4. Composant de châssis roulant selon la revendication 2 ou 3, **caractérisé en ce que** le creux (15) dans la deuxième zone de réception d'articulation (14) s'étend parallèlement au plan de stratification (26) de la première zone de réception d'articulation (5) ou dans le plan de stratification (26) de la première zone de réception d'articulation (5) ou dans un plan comprenant ce plan de stratification (26).

5. Composant de châssis roulant selon l'une des revendications 2 à 4, **caractérisé en ce que** l'articulation (4) disposée dans la deuxième zone de réception d'articulation (14) est enfoncée dans le creux (15) de la deuxième zone de réception d'articulation (14).

6. Composant de châssis roulant selon la revendication 5, **caractérisé en ce que** l'articulation (4) disposée dans la deuxième zone de réception d'articulation (14) est en plus calée par complémentarité de formes dans le creux (15) de la deuxième zone de réception d'articulation (14).

7. Composant de châssis roulant selon l'une des revendications précédentes, **caractérisé en ce que** l'articulation (4) disposée dans la deuxième zone de réception d'articulation (14) est réalisée sous la forme d'une couche d'élastomère.

8. Composant de châssis roulant selon l'une des revendications précédentes, **caractérisé en ce qu'**un creux (13) est incorporé dans le stratifié dans la première zone de réception d'articulation (5), dans lequel repose l'articulation (3) disposée dans la première zone de réception d'articulation (5).

9. Composant de châssis roulant selon la revendication 8, **caractérisé en ce que** le creux (13) dans la première zone de réception d'articulation (5) s'étend perpendiculairement au plan de stratification (26) de la première zone de réception d'articulation (5).

10. Composant de châssis roulant selon l'une des revendications précédentes, **caractérisé en ce que** l'articulation (3) disposée dans la première zone de réception d'articulation (5) est réalisée sous la forme d'une articulation à rotule.

11. Composant de châssis roulant selon l'une des revendications précédentes, **caractérisé en ce que** le stratifié est tordu dans une portion du corps de composant (2) qui se trouve entre la première zone de réception d'articulation (5) et une troisième des zones de réception d'articulation, de sorte que la troisième zone de réception d'articulation présente une torsion par rapport à la première zone de réception d'articulation (5) .

12. Composant de châssis roulant selon la revendication 11, **caractérisé en ce que** le corps de composant (2) possède plusieurs bras (6, 7), qui comportent respectivement l'une des portions (16), la deuxième zone de réception d'articulation (14) étant reliée à la première zone de réception d'articulation (5) par un premier des bras (6) et la troisième zone de réception d'articulation à la première zone de réception d'articulation (5) par un deuxième des bras (7).

13. Composant de châssis roulant selon l'une des revendications précédentes, **caractérisé en ce que** le stratifié comporte une matrice de matière plastique thermodurcissable.
